# EUROPEAN PATENT SPECIFICATION

(11) **EP 0 728 171 B1**
(45) Date of publication and mention of the grant of the patent: **07.05.1997**
(21) Application number: 95901372.3
(22) Date of filing: 10.11.1994
(51) Int. Cl.: C10J 3/46

(54) **A PROCESS FOR THE GASIFICATION OF A PETROLEUM COKE FEEDSTOCK**
VERFAHREN ZUR VERGASUNG EINES PETROLEUMKOKEINSATZES
PROCEDE DE GAZEIFICATION D'UNE CHARGE INITIALE DE COKE DE PETROLE

(30) Priority: 12.11.1993 US 153844
(43) Date of publication of application: 28.08.1996
(73) Proprietor: SHELL INTERNATIONALE RESEARCH MAATSCHAPPIJ B.V., 2596 HR Den Haag (NL)
(72) Inventor: MAHAGAOKAR, Uday, Houston, TX 77071 (US); MALONE, George, Hale, Houston, TX 77079 (US); FARMAYAN, Walter, Farman, Houston, TX 77055 (US)
(86) International application number: EP9403753
(87) International publication number: WO9513339

(56) References cited:
- EP-A- 0 066 563
- EP-A- 0 209 261
- EP-A- 0 386 352
- FR-A- 2 369 502
- US-A- 4 655 792

## Description

The invention relates to a process for the gasification of a petroleum coke feedstock.

The combustion of a carbonaceous material such as a solid carbonaceous fuel by reaction with a source of gaseous oxygen is well known. In such a reaction, an amount of air or oxygen equal to or greater than that required for complete combustion is used. As a result, the gaseous effluent contains carbon dioxide with little, if any, carbon monoxide. It is also known to carry out the gasification or partial oxidation of solid carbonaceous materials or fuels. This method employs a limited quantity of oxygen or air to produce primarily carbon monoxide and hydrogen, i.e., synthesis gas.

Petroleum coke has emerged as an economically attractive feedstock for gasification to synthesis gas ("syngas") which can be subsequently used to generate electric power, steam, and/or chemicals. Petroleum coke is a byproduct of the oil refining process and is specifically produced in the processing of oil residue. The heavy oil residue obtained by fractionating crude oil presents refiners with two options. In the first option it can be sold as residual fuel oil. In the second option it can be processed further to extract the high-value lighter components. Often, the residual fuel oil is high in sulphur content and its use as combustion fuel is therefore limited due to environmental constraints.

As the residual fuel oil market gets saturated, it is economically more attractive for refiners to maximize the yield of high value products such as gasoline and jet fuel. This type of upgrading or extraction of light components from the heavy residue is done by means of a coking operation. As the light components are extracted, the material that is left over is a solid byproduct called coke.

Over the last decade, the crude oils used by refineries have become heavier, leading to installation of many coking facilities. This has led to a dramatic increase in the production of petroleum coke and a significant decline in its market price. Another trend observed over the last decade is that the sulphur content of crudes used by refineries has increased steadily. Both trends reflect the fact that the higher quality, low sulphur crude supplies have gradually depleted, driving refiners toward lower quality, heavier crudes that are more abundant and cheaper. This has resulted in an increasing supply of residual fuel oil with a continuously increasing sulphur content. An oversupply of high sulphur residual fuel oil has led refiners toward more coking. This has resulted in a higher production of high sulphur coke per unit of crude refined.

Petroleum coke is traditionally used in two applications. In one application, higher quality anode grade coke with low sulphur levels is used in electrode manufacture. In a second application, lower quality fuel grade coke with high sulphur levels is used for direct combustion. With the decline of crude quality over time, coke quality has also declined, thereby creating an over-supply of high-sulphur fuel grade coke. The fuel market for coke has been severely affected by tighter environmental laws in most countries. As sulphur emissions are increasingly regulated, high-sulphur coke will become progressively more difficult to burn, and will have no convenient market outlets.

A gasification or partial combustion process offers a suitable alternative for the efficient utilization of high-sulphur coke. Direct combustion of high-sulphur coke produces SO₂ emissions. In contrast, gasification in a reducing atmosphere converts the sulphur to H₂S. The H₂S can be almost completely recovered as clean elemental sulphur by using well established sulphur removal technologies.

Refineries typically use three types of coking technologies - delayed coking, fluid coking, and flexicoking. Most units use delayed coking, and some units use fluid coking, while flexicoking is rarely used. The coke produced from delayed cokers is either sponge coke or needle coke, while that produced from fluid cokers is a small particle size product called fluid coke.

Patent document EP-A-0 386 357 describes gasification of petroleum coke by admixing with an additive comprising a basic ash component, alumina and silica to form a liquid phase slag followed by gasification in the presence of steam.

Various problems are associated with the different types of feeds used in gasification processes. Although petroleum coke is a suitable feedstock for a coal gasification process, it has characteristic differences in properties compared with coal, which requires special consideration in the gasification process. Petroleum coke has little to no inherent oxygen content that results in low reactivity, and requires high gasification temperatures to achieve good conversion. Also, coke has low volatile matter and low inherent hydrogen content.

It is an aspect of this invention therefore, in a dry feed entrained flow gasifier, to overcome the deficiency in oxygen and hydrogen by adding steam to the coke-oxygen mixture that is fed to the burner.

Petroleum coke has a high heating value due to a high level of fixed carbon. For example, coke gasified in one embodiment of this invention, per the Example section below, had a fixed carbon content of 80.6% (as received). It had a heating value of 35654.8 J/g (15,342 Btu/lb) (moisture-free). By comparison, typical bituminous coals have a fixed carbon content of 40-50% and a heating value of 27888-32536 J/g (12,000-14,000 Btu/lb). The high heating value of petroleum coke results in a higher yield of syngas in terms of MMBtu or standard cubic feet of gas per ton of coke processed. Thus a lower feed rate of coke is required for a given power output.

Petroleum coke typically has high sulphur content, and all of it is organic sulphur. Typical sulphur levels are 4-8% on a moisture-free basis. The primary consequences of sulphur level are reflected in high H₂S concentrations in syngas which require larger sulphur removal systems. The sulphur in the coke also contributes to corrosion, and therefore requires appropriate selection of design materials and operating conditions.

Petroleum coke has a very low ash content, typically 0.5%w on a moisture-free basis. Ash content has important consequences for an entrained flow membrane wall gasifier for two reasons. First, it influences the amount of slag produced which then has to be processed by the slag tap, slag handling system, and the overhead flyash handling system. Secondly, it affects the amount of insulating slag layer formed on the membrane wall of the gasifier. The slag layer protects the tubes of the membrane wall from excessive heat fluxes thereby increasing tube life. The slag layer also prevents excessive heat loss during the gasification reaction, thereby maximizing the conversion of coal energy to syngas energy.

Although petroleum coke has a low ash content, a large fraction of the ash is composed of vanadium and nickel. As with other metals, the most desirable place to capture vanadium and nickel would be in the slag, since slag is glassy and vitreous and thereby non-leachable. If vanadium and nickel are not effectively captured in the slag, these metals could enter the gas and water streams creating environmental hazards and downstream corrosion problems.

It is therefore an object of this invention to add slag-forming materials for the capture of a portion, and advantageously substantially all, of the vanadium and nickel in the slag and flyash. With the vanadium and nickel captured, the syngas and the process water effluent are thereby rendered free of these metals.

One way to overcome the low ash content of petroleum coke is to blend it with coal that contains a medium to high level of ash. However, since coal is a higher priced feedstock, this would dilute the economic benefits of using all-coke.

It is therefore an object of the present invention to provide a method for gasification of a petroleum coke feedstock wherein small amounts of slag-forming materials that are easily available at a low price are added prior to the gasification step and that would provide an effective coating or protective layer on the membrane wall of the gasifier.

The present invention provides a method for the gasification of a petroleum coke feedstock comprising the steps of:
admixing an ash-deficient substantially dry petroleum coke feed with at least an additive component being a slag-forming material selected from the group consisting of blast furnace slag, power plant flyash, coal gasification slag, sand, X, Al₂2₃, and SiO₂, where X is a basic ash-component selected from the group consisting of CaO, CaCO₃, MgO, MgCO₃, iron oxides, boron oxides, sodium oxides and potassium oxides and mixtures thereof, thereby producing at least an additive component(s)/feed mixture; determining at least a X:Al₂O₃:SiO₂ weight ratio in said additive component(s)/feed mixture; plotting this weight ratio on an X, Al₂O₃, SiO₂ ternary component phase diagram and deriving from the said phase diagram information whether the said additive component(s)/feed mixture has the appropriate composition to form a substantially liquid-phase slag at gasifying conditions; and
gasifying said additive component(s)/feed mixture in a gasifier, having an inner wall and a slag tap, under gasifying conditions and in the presence of steam, thereby producing a gas comprising hydrogen and carbon monoxide, wherein at gasification conditions the slag-forming material in said additive component(s)/feed mixture produces a slag of appropriate viscosity which wets said inner wall of said gasifier to form an inner frozen layer of slag and an outer molten layer of slag on said inner wall; wherein said molten slag flows freely through said slag tap; and wherein said molten slag does not carryover out the top of the gasifier.

The invention will now be described in more detail by way of example by reference to the accompanying drawings, in which
Fig. 1 depicts an example of the X, Al₂O₃, SiO₂ ternary component phase diagram used in the method of this invention;
Fig. 2 depicts an example of the X, Al₂O₃, SiO₂ ternary component phase diagram used in the method of this invention having plot points for different petroleum cokes inside the areas bounded by the 1400 °C and 1500 °C isotherms; and
Fig. 3 depicts carbon conversion per pass as a function of oxygen/carbon ratio for petroleum coke according to one embodiment of this invention.

Reference will now be made to several process aspects of the invention.

### A. FEEDS AND ADDITIVE COMPONENTS AND MIXTURE THEREOF

The feed for use with the method of this invention is an ash-deficient petroleum coke. The term "ash-deficient" as used in this specification and appended claims means insufficient ash to form a sufficient amount of slag layer on the wall of the gasifier for insulation or metals-removal. The additive components for use with the process of this invention are those that will overcome the ash-deficiency of the petroleum coke. Once the ash-deficiency is met, additive components are also used to modify the "ternary" composition ratio of the flux components. The modification is sufficient to assure the slag is a liquid at gasification conditions, especially at the slag tap. The slag tap is where the slag is removed from the bottom of the gasifier.

The additive components include blast furnace slag, power plant flyash, coal gasification slag, sand, Al₂O₃, SiO₂ and X, where X is a basic component of the ash, such as CaO, CaCo₃, MgO, MgCo₃, iron oxides, boron oxides, sodium oxides, and potassium oxides. These materials are typically available at low cost depending on geographical regions. Calcium oxide is more preferred for its economy and availability.

In each component of X, it is the oxide form that is of interest. Since the mineral forms, i.e., carbonate forms, are readily available and the oxide form is not, X is typically mixed with the petroleum coke feed in the mineral form. For example, MgO and CaO can be derived from various Mg- or Ca-containing minerals such as CaCO₃, MgCO₃, or dolomite. Iron oxides can be derived from various iron oxide/iron based minerals, such as sulphides. For iron, it is the ferrous oxide, FeO, which is of interest, although iron is typically mixed in the ferric form, Fe₂O₃, and part of it will decompose in the gasifier to FeO. The mineral form of the other X components will decompose in the gasifier into the oxide form. It is the oxide form that is used for determining weight ratios for this method as discussed below in a later section. One of these components is added to the coal feed. Advantageously, at least two of these additive components are used in combination and are added to the coal feed.

The feed and the additive components are mixed either in the gasifier or upstream of the gasifier. A particularly efficient method of mixing is to pulverize both the dry feed and the dry additive components in the pulverizer. Either, or both, the feed or the additive compounds are fed to the gasifier either dry or in a water slurry. A dry method of feeding a pulverized mixture of petroleum coke and slag-forming material is to pressurize the mixture by means of lockhoppers. The mixture is then fed to the gasifier burners using dense phase flow.

If the additive compounds are not mixed with the feed before introducing the feed into the gasifier, then the additive compounds are optionally pulverized separately from the feed. The compounds are then mixed with the feed after the pulverizing stage. Optionally, the compounds are injected independently of the feed into the gasifier. In independent injection of the additive compounds, they are either transported pneumatically in nitrogen or carbon dioxide or are carried in a water slurry.

### B. CONCENTRATIONS OF ADDITIVE COMPOUND AND PERCENT REMOVAL

### 1. Generally:

The natural concentration of additive components in the feed material varies widely with the source of the feed. As a result, varying levels of additive components must be added to the feed to correspond to these natural variations in the feed. Typically, however, the amount of slag-forming material added is 1-10% by weight of coke, preferably 3-8% by weight of coke, and more preferably, 5-7% by weight of coke.

### 2. Significance of Temperature of Critical Viscosity:

Each additive discussed above is a convenient candidate for slag-forming materials that could be used in the gasification of petroleum coke. However, slag viscosity and crystallization behaviour varies with temperature and coke composition. Also, since blast furnace slag, power plant flyash, and coal gasification slag are derived from some coal, their properties will depend on the type of coal used. Depending on the type of coal used, the slagging behaviour may require additional adjustment for gasification of petroleum coke.

It is important to know whether any of these materials will produce a slag that has a propensity to display a T_{cv} or "temperature of critical viscosity." "T_{cv}" means the temperature of critical viscosity for the slag. This is the temperature at which the slope of a curve on a temperature versus viscosity graph for slag will exhibit a sudden increase in slope. That is, an otherwise shallow slope with a smooth gradual increase in viscosity with reduction in temperature will change at the T_{cv} to a suddenly steep slope with a rapid increase in viscosity with only small reductions in temperature. This sharp increase in the temperature-viscosity profile is associated with solids crystallization as the melt cools.

The existence of a T_{cv} particularly in close vicinity to the slag tap operating temperature is highly undesirable. Where this situation exists, the resilience of the process to upsets, particularly momentary downward temperature excursion is greatly reduced.

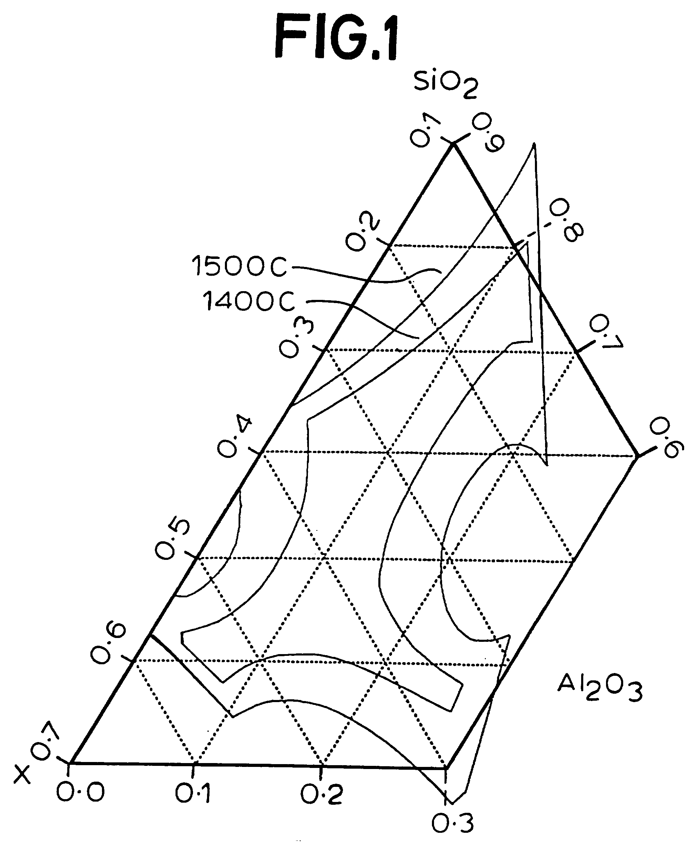

Solids crystallization is responsible for the occurrence of a T_{cv}. such occurrence is a kinetic process. It is difficult to predict slag flow/phase behaviour from theoretical considerations alone. Thus, using empirical methods a range of feeds was used in testing this invention. This range was sufficiently broad to define with confidence a slag composition "window of operability." This window can be depicted on a CaO-SiO₂-Al₂O₃ ternary diagram (Fig. 1). All of the basic ash components other than SiO₂ and Al₂O₃ are lumped with CaO in their reducing effect on ash viscosity.

### 3. Determination of Initial Weight Ratio:

The first step in determining the amounts of additive components to add is to determine the X, Al₂O₃, SiO₂ initial weight ratio. X is a basic flux/ash component and does not include Al₂O₃ or SiO₂. Advantageously, X is an additive component selected from the group consisting of CaO, CaCO₃, MgO, MgCO₃, an iron oxide, and mixtures thereof. The X, Al₂O₃, SiO₂ initial weight ratio, is obtained or calculated by determining the concentration of each component by ASTM methods D3176-89, D3682-91, or their equivalents. In these methods the total ash content is first determined and then the weight fraction of all significant ash components is determined. From this information, the X, Al₂O₃, SiO₂ initial weight ratio is readily calculated.

### 4. Plotting the Initial Weight Ratio:

Initially sufficient amounts of blast furnace slag, power plant flyash, coal gasification slag, and/or sand are added. The amount is sufficient to bring the weight percent of ash components in the coke feed up to a percent sufficient to provide an adequate volume of slag coating on the reactor walls. Further additives are then added to modify the properties of the resulting slag. The initial weight ratio (as'a molar ratio) is determined. It is plotted on an X, Al₂O₃, SiO₂ "ternary" component phase diagram. The term "ternary" as used herein and in the appended claims means a three component diagram where "X" is treated as one component although it may be a mixture of different components.

The term "X, Al₂O₃, SiO₂ 'ternary' component phase diagram" as used herein and in the appended claims means the X, Al₂O₃, SiO₂ "ternary" component phase diagram in Fig. 1 of this specification or substantially similar diagrams. The plotting is done by first converting the weight ratio to a molar ratio, since the diagram is on a molar ratio basis. Since X may be a mixture, only the molar ratios of Al₂O₃, SiO₂ need be determined and plotted. The "molar concentration" of X will follow. The plot is made based on the oxide forms of the X components where the ferric oxide form of iron oxide is used.

### 5. Determining Desired Final Weight Ratio:

With the initial weight ratio plotted, the next step is to determine the desired final weight ratio. This is done by adding at least one additive component, advantageously at least two, as necessary to plot the final weight ratio, i.e., its equivalent molar ratio, within the area enclosed by the 1500 °C liquidus isotherm in the "ternary" component diagram in Fig. 1. Advantageously, it is plotted within the area enclosed by the 1400 °C liquidus isotherm area. The 1500 °C liquidus isotherm, for example, corresponds to the locations on the diagram at which the mixture of ash components will begin to melt at 1500 °C.

The resulting slag should have the appropriate viscosity range to be a liquid slag at the gasification temperatures. Operating conditions are discussed below in a separate section. The slag can properly wet the membrane wall surface to form an inner frozen layer and an outer molten layer. The molten slag should have appropriate flow characteristics to flow freely through the slag tap since a blocked slag tap will require shutting down the reactor. The slag should not be too thin and runny to avoid liquid carryover to the top of the gasifier.

Advantageously, the slag composition has a viscosity between an upper bound and lower bound at the operating temperature of the reactor exit and slag tap. An upper bound of 10 Pa.s is used as a conservative value to ensure gravity flow of slag out of the tap. A lower limit of 1-2 Pa.s is used to ensure that the slag is not too thin to be carried over by the upward flow of syngas.

Thus, where the above analysis and method are followed and the initial weight ratio is modified to obtain the desired final weight ratio a beneficial result is obtained. That is, an effective amount of a slag formed from X, Al₂O₃, SiO₂ will not have a T_{cv} within about 200 °C of gasification, i.e., slag tap, conditions to assure the slag tap does not become blocked during normal or abnormal fluctuations of temperature at the slag tap. A temperature range within about 200 °C is selected since it reflects the range of possible fluctuations of temperature in the case of process or equipment problems.

At least one additive component is mixed dry with the dry feed thereby producing a dry mixture. Advantageously, at least an effective amount of at least two, and optionally three, of the additive compounds are added and are selected from X, Al₂O₃, and SiO₂. The resulting dry mixture has an X:Al₂O₃:SiO₂ final weight ratio effective to result in a slag not having a T_{cv} being produced in the gasifier and at the slag tap when the dry mixture is gasified within about 200 °C of, or at, gasifying conditions.

The necessary final weight ratio varies depending on what X is selected. Where X includes a Mg- or Ca-containing compound besides ferrous oxide, in the X:Al₂O₃:SiO₂ final weight ratio X should contain from about 20% by weight to about 40% by weight of the total weight of X, Al₂O₃, and SiO₂. This is based on the oxide form of the X components and the ferric oxide form of iron oxide. Advantageously, the percent should be from about 25% by weight to about 35% by weight. Accordingly, where X is a Mg- or Ca-containing compound, the weight of Al₂O₃ and SiO₂ combined should comprise from about 60% by weight to about 80% by weight, of the total weight of X, based on the oxide form of the X components, Al₂O₃, and SiO₂. Advantageously, this percent is from about 65% by weight to about 75% by weight.

Where X includes a ferric oxide, the ferric oxide should comprise less than about 50% by weight of the total weight of X. This is based on the oxide form of the X components other than iron components and based on the ferrous oxide form of the iron oxide, Al₂O₃, and SiO₂. Typically only 50% by weight of the ferric oxide will decompose in the gasifier into ferrous oxide, FeO. This is the iron oxide of interest since it is only FeO that is active in the method of this invention.

Accordingly, where X includes an iron oxide, Al₂O₃ and SiO₂ combined should comprise at least about 50% by weight (or its molar equivalent) of the total weight of X, Al₂O₃, and SiO₂. Advantageously, this percent is from about 55 mol.% to about 75 mol.%. In the X:Al₂O₃:SiO₂ final weight ratio, the SiO₂ to Al₂O₃ ratio should be greater than about 2, and preferably from about 2 to about 8. Where the parent coal had an ash silica/alumina ratio below 1.7, then silica should be added to the petroleum coke feed in the instant invention in the form, e.g., of sand to bring the ratio to at least about 2.0 and in particular to about 2.5.

An upper limit in the silica/alumina ratio is driven by the crystallization of the trydimite and pseudowollastinite phases on the ternary diagram. The upper boundary is approximately at the 1400 °C isotherm on the CaO-SiO₂-Al₂O₃ ternary diagram and corresponds to a silica/alumina ratio of from about 9 to about 10.

The total amount of additives added varies with the initial ash content in the feed. This varies little among petroleum coke feeds. Petroleum coke feeds have an initial ash content of about 0.3% to about 1% by weight. Addition of additive components may be up to about 1/2 of the initial ash content.

### C. OPERATING CONDITIONS

The gasifier is operated at gasifying conditions. These conditions may vary from feed to feed. Advantageously, an entrained flow gasifier is applied. The gasifier temperature is high enough to gasify a substantial portion of the feed without production of undesirable side-products such as tars and phenols and other aromatics. Typical temperatures in the gasifier are from about 1100 °C to about 2000 °C. The gasifier temperature is advantageously from about 1425 °C to about 1575 °C, and more in particular from about 1425 °C to about 1455 °C. The pressure of the gasifier is advantageously greater than about 14 bar and in particular from about 21 bar to about 31,5 bar.

### D. STEAM ADDITION

This invention also relates to an efficient technique for overcoming the low oxygen, low hydrogen, and low volatile matter content of petroleum coke. The low oxygen content leads to low reactivity that requires high gasification temperatures to achieve good carbon conversion. Excessively high temperatures could create severe conditions in the gasifier which could lead to premature deterioration of the membrane wall. As part of this invention, appropriate amounts of steam are added to the gasifier through the burners. This steam participates in the gasification reaction, supplying both the oxygen molecule and the hydrogen molecule. As a result, the coke is gasified to high conversion levels at moderate gasification temperatures that are normally used with coal. The hydrogen molecule supplied by steam enables the gasifier to make up the hydrogen deficiency in coke. Thus, a concentration of hydrogen in the syngas is produced that is normally produced with coal gasification.

The amount of steam added to the coke is in the ratio of 15-35% by weight of coke and advantageously 20-30% by weight of coke. The steam is added with the coke and oxygen through the burners to get good mixing in the reaction zone. Steam supplies part of the oxygen used in the reaction. Thus, it helps to keep the import oxygen requirement in the same general range as required in the gasification of'coals. The oxygen/moisture-and-ash-free coal ratio for petroleum coke gasification was in the range 1.0-1.1, whereas the same ratio for bituminous coals is 0.9-1.05. The ratio for lower rank coals such as sub-bituminous coals and lignites that are more reactive is generally in the range 0.8-0.9.

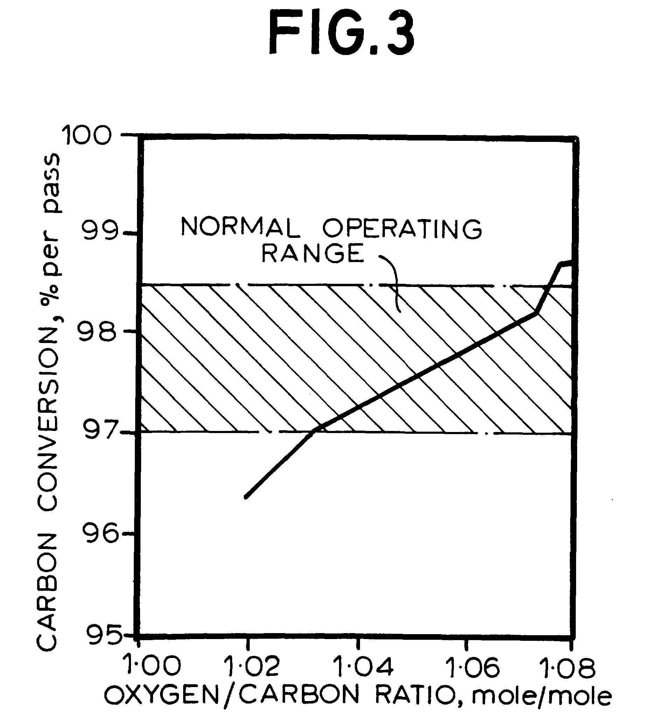

Carbon conversion is a good indicator of the efficiency of a gasification process in converting coke to syngas. Fig. 3 shows carbon conversion per pass (vertical axis) as a function of oxygen/carbon ratio (horizontal axis) for petroleum coke. In this plot, the oxygen is calculated from all three sources - oxygen added through the burner, oxygen added via steam, and oxygen present in the coke. The key observation here is that petroleum coke, with appropriate steam addition, produces single pass conversion that is sufficiently high to be in the normal operating range of 97-98.5%.

Recycling of the flyash back to the gasifier ensures almost complete utilization of the carbon in the coke. The low volatile matter and low reactivity of petroleum coke are effectively overcome by appropriate amount of steam addition, producing overall carbon conversion greater than 99.0%.

### E. CONVERSION, COOLING, AND SOLIDS REMOVAL

In the gasifier the petroleum coke partially oxidizes to form synthesis gas that is primarily carbon monoxide and hydrogen. The additive components modify the X:Al₂O₃:SiO₂ final weight ratio of the petroleum coke. This results in movement of these components in the slag from a solid-phase part of the ternary phase diagram to a liquid-phase portion of the diagram. Thus these components form the desired substantially liquid-phase slag in the gasifier and at the slag tap when the petroleum coke is gasified.

The synthesis gas produced is then passed from the gasifier to one or more quenching and/or cooling stages and/or heat recovery stages. Flyash is cooled to condense to solid particles. The synthesis gas stream containing the solid particles is passed to one or more solids removal stages. The solids removal stage is advantageously a cyclone or ceramic candle filter, used individually or in combination. An electrostatic precipitator is optionally used where the system is at or near atmospheric pressure. The synthesis gas is recovered from the solids separation stage.

The method of the invention will now be described by reference to the following example.

### EXAMPLE

The following example is not intended to limit the scope of the invention. In this example a 250 ton/day (254000 Kg/day if British tons) (226900 Kg/day if US tons) dry feed, upflow, entrained flow, refractory-lined, membrane wall gasification reactor was operated. A feed of petroleum coke was used as identified in the Table below. The temperature in the contacting zone was between 1480 °C and 1760 °C, as indicated in the Table, and the pressure was between 22,5 bar and 26 bar.

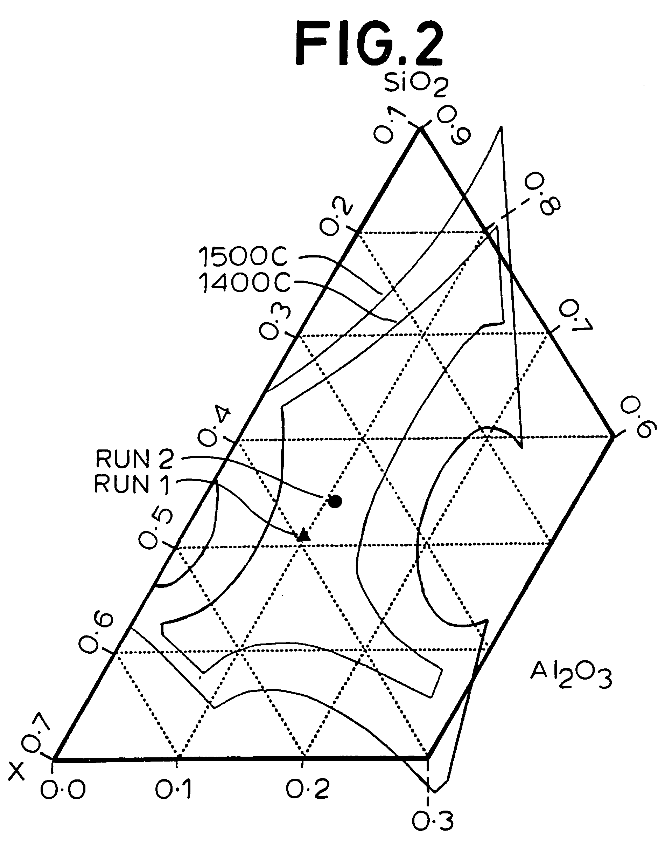

The X:Al₂O₃:SiO₂ initial weight ratio was determined for various feeds. This X:Al₂O₃:SiO₂ initial weight ratio was then plotted on the "ternary" component phase diagram as is indicated in Fig. 2.

In the feeds the X:Al₂O₃:SiO₂ initial weight ratio was modified such that the plots fell inside the area bounded by the 1400 °C or the 1500 °C liquidus isotherms. This is shown in Fig. 2. These feeds were run in the gasifier. As shown in the Table below, these feeds did not result in plugged slag taps. This indicates the slag produced from such petroleum coke was substantially liquid at the slag tap. In run No. 1 the initial feed had an ash content of about 0.45% by weight that consisted of about 6.8% by weight SiO₂, 1.9% by weight Al₂O₃, 12.1% by weight X (flux agent), 71.8% by weight V, and 7.4% by weight Ni. Additives consisting of about 47.4% by weight SiO₂, 15.13% by weight Al₂O₃, and 37.5% by weight X (flux agent), were mixed with the feed before gasification. The additives were derived from El Cerrejon coal slag. Final ash content after additive mixing was about 5% by weight.

In run No. 2 the initial feed had an ash content the same as in run No. 1. Additives consisting of 48.3% by weight SiO₂, 15.9% by weight Al₂O₃, and 35.8% by weight X (flux agent) were mixed with the feed prior to gasification. The additives were derived from the slag resulting from run No. 1. Final ash content after additive mixing was about 5% by weight.

Accordingly, by use of the additives described above in the method of this invention, the slag is substantially liquid and does not block the slag tap.

**TABLE**

| CHARACTERIZATION OF FLUX COMPONENT PHASES BASED ON X:Al₂O₃:SiO₂ WEIGHT RATIO | | | | |
|---|---|---|---|---|
| Run No. | Coke Temp. | In/Out of isotherms | Slag Tap Blocked | T_{cv} Present |
| 1 | 1530 °C | In | No | No |
| 2 | 1520 °C | In | No | No |

Various modifications of the present invention will become apparent to those skilled in the art from the foregoing description. Such modifications are intended to fall within the scope of the appended claims.

## Claims

1. A method for the gasification of a petroleum coke feedstock comprising the steps of:
admixing an ash-deficient substantially dry petroleum coke feed with at least an additive component being a slag-forming material selected from the group consisting of blast furnace slag, power plant flyash, coal gasification slag, sand, X, Al₂O₃, and SiO₂, where X is a basic ash-component selected from the group consisting of CaO, CaCO₃, MgO, MgCo₃, iron oxides, boron oxides, sodium oxides and potassium oxides and mixtures thereof, thereby producing at least an additive component(s)/feed mixture; determining at least a X:Al₂O₃:SiO₂ weight ratio in said additive component(s)/feed mixture, plotting this weight ratio on an X, Al₂O₃, SiO₂ ternary component phase diagram and deriving from the said phase diagram information whether the said additive component(s)/feed mixture has the appropriate composition to form a substantially liquid-phase slag at gasifying conditions; and
gasifying said additive component(s)/feed mixture in a gasifier, having an inner wall and a slag tap, under gasifying conditions and in the presence of steam, thereby producing a gas comprising hydrogen and carbon monoxide, wherein at gasification conditions the slag-forming material in said additive component(s)/feed mixture produces a slag of appropriate viscosity which wets said inner wall of said gasifier to form an inner frozen layer of slag and an outer molten layer of slag on said inner wall; wherein said molten slag flows freely through said slag tap; and wherein said molten slag does not carryover out the top of the gasifier.

2. The method as claimed in claim 1 wherein 1-10%, by weight of coke feed, of said slag-forming material is added to said coke feed.

3. The method as claimed in claim 1 or 2 wherein the temperature in the gasifier is from about 1100 °C to about 2000 °C.

4. The method as claimed in any one of claims 1-3 wherein the pressure in the gasifier is from 21 bar to 31.5 bar.

5. The method as claimed in any one of claims 1-4 wherein said steam comprises 15-35% by weight based on said petroleum coke.

6. The method as claimed in any one of claims 1-5 wherein a coke feed pulverizing stage upstream of said gasifier is present and wherein said slag-forming material is admixed dry with said coke feed at said pulverizing stage.

7. The method as claimed in any one of claims 1-5 wherein a coke feed pulverizing stage upstream of said gasifier is present and wherein said slag-forming material is admixed dry with said coke feed after said pulverizing stage.

8. The method as claimed in any one of claims 1-7 comprising the steps of:
producing a first additive component(s)/feed mixture;
determining a X:Al₂O₃:SiO₂ initial weight ratio in said first additive component(s)/feed mixture,
plotting said initial weight ratio on an X, Al₂O₃, SiO₂ ternary component phase diagram; modifying the said initial weight ratio by admixing with said first additive component(s)/feed mixture a sufficient amount of at least one additive component selected from X, Al₂O₃, and SiO₂, thereby producing a second mixture, and obtaining an X:Al₂O₃:SiO₂ final weight ratio, which when plotted on the said phase diagram, falls inside the area bounded by the liquidus isotherms of said diagram at the gasification temperatures and pressures in the gasifier;
passing said second mixture to the gasifier; and
gasifying said second mixture.

9. The method as claimed in claim 8 wherein the weight of X in the X:Al₂O₃:SiO₂ final weight ratio consists essentially of from about 20% by weight to about 40% by weight of the total weight of X, Al₂O₃, and SiO₂, where the weight of X is based on the oxide form of the X components.

## Patentansprüche

1. Verfahren zur Vergasung eines Petrolkoks-Einsatzstoffs, bei dem man:
einem aschearmen, im wesentlichen trockenen Petrolkoks-Einsatzstoff mindestens eine Additivkomponente, bei der es sich um ein schlackebildendes Material handelt, das aus der Gruppe bestehend aus Hochofenschlacke, Kraftwerk-Flugasche, Kohlevergasungsschlacke, Sand, X, Al₂O₃ und SiO₂, wobei X eine basische Asche-Komponente, ausgewählt aus der Gruppe bestehend aus CaO, CaCO₃, MgO, MgCO₃, Eisenoxiden, Boroxiden, Natriumoxiden und Kaliumoxiden sowie deren Gemischen, bedeutet, ausgewählt ist, beimischt, wobei man zumindest eine Mischung aus Additivkomponente(n) und Einsatzstoff erhält, in der Mischung aus Additivkomponente(n) und Einsatzstoff zumindest ein Gewichtsverhältnis X:Al₂O₃:SiO₂ bestimmt, dieses Gewichtsverhältnis in ein ternäres Phasendiagramm der Komponenten X, Al₂O₃ und SiO₂ einträgt und aus dem Phasendiagramm die Information gewinnt, ob die Mischung aus Additivkomponente(n) und Einsatzstoff die geeignete Zusammensetzung zur Bildung einer unter Vergasungsbedingungen im wesentlichen flüssigen Schlacke aufweist, und
die Mischung aus Additivkomponente(n) und Einsatzstoff in einem Vergaser mit einer Innenwand und einem Schlackenabstich unter Vergasungsbedingungen und in Gegenwart von Wasserdampf zu einem Wasserstoff und Kohlenmonoxid enthaltenden Gas vergast, wobei das in der Mischung aus Additivkomponente(n) und Einsatzstoff enthaltene schlackebildende Material unter Vergasungsbedingungen eine Schlacke mit geeigneter Viskosität bildet, die die Innenwand des Vergasers unter Ausbildung einer inneren erstarrten Schlackeschicht und einer äußeren schmelzflüssigen Schlackeschicht auf der Innenwand benetzt, die schmelzflüssige Schlacke frei durch den Schlackenabstich fließt und die schmelzflüssige Schlacke nicht am Kopf des Vergasers ausgetragen wird.

2. Verfahren nach Anspruch 1, bei dem man dem Koks-Einsatzstoff 1-10 Gew.-% des schlackebildenden Materials, bezogen auf das Gewicht des Koks-Einsatzstoffs, zusetzt.

3. Verfahren nach Anspruch 1 oder 2, bei dem man die Temperatur im Vergaser auf etwa 1100°C bis etwa 2000°C einstellt.

4. Verfahren nach einem der Ansprüche 1-3, bei dem man den Druck im Vergaser auf 21 bar bis 31,5 bar einstellt.

5. Verfahren nach einem der Ansprüche 1-4, bei dem man 15-35 Gew.-% Wasserdampf, bezogen auf den Petrolkoks, einsetzt.

6. Verfahren nach einem der Ansprüche 1-5, bei dem man dem Vergaser eine Koks-Einsatzstoff-Feinmahl vorschaltet und das schlackebildende Material in der Feinmahlstufe trocken mit dem Koks-Einsatzstoff vermischt.

7. Verfahren nach einem der Ansprüche 1-5, bei dem man dem Vergaser eine Koks-Einsatzstoff-Feinmahl vorschaltet und das schlackebildende Material nach der Feinmahlstufe trocken mit dem Koks-Einsatzstoff vermischt.

8. Verfahren nach einem der Ansprüche 1-7, bei dem man:
eine erste Mischung aus Additivkomponente(n) und Einsatzstoff herstellt,
in der ersten Mischung aus Additivkomponente(n) und Einsatzstoff ein Anfangsgewichtsverhältnis X:Al₂O₃:SiO₂ bestimmt,
das Anfangsgewichtsverhältnis in ein ternäres Phasendiagramm der Komponenten X, Al₂O₃ und SiO₂ einträgt, das Anfangsgewichtsverhältnis durch Beimischen einer ausreichenden Menge mindestens einer unter X, Al₂O₃ und SiO₂ ausgewählten Additivkomponente zu der ersten Mischung aus Additivkomponente(n) und Einsatzstoff modifiziert, wobei man eine zweite Mischung und ein Endgewichtsverhältnis X:Al₂O₃:SiO₂ erhält, das bei Eintragung in das Phasendiagramm bei den im Vergaser herrschenden Vergasungstemperaturen und den Vergasungsdrücken in den von den Liquidus-Isothermen des Diagramms begrenzten Bereich fällt,
die zweite Mischung dem Vergaser zuführt und
die zweite Mischung vergast.

9. Verfahren nach Anspruch 8, bei dem man das Gewicht von X im Endgewichtsverhältnis X:Al₂O₃:SiO₂ im wesentlichen von etwa 20 Gew.-% bis etwa 40 Gew.-% des Gesamtgewichts von X, Al₂O₃ und SiO₂, wobei sich das Gewicht von X auf die Oxidform der X-Komponenten bezieht, einstellt.

## Revendications

1. Procédé de gazéification d'une charge initiale de coke de pétrole comprenant les étapes de:
mélange d'une charge de coke de pétrole essentiellement sèche pauvre en cendres avec au moins un composant additif étant un matériau formant des scories sélectionné parmi le groupe composé des scories de haut fourneau, des cendres volantes de centrale électrique, des scories de gazéification du charbon, du sable, de X, de Al₂O₃ et de SiO₂, où X est composant de base de la cendre sélectionné dans le groupe composé de CaO, de CaCO₃, de MgO, de MgCO₂, d'oxydes de fer, d'oxydes de bore, d'oxydes de sodium et d'oxydes de potassium et de mélanges de ceux-ci, produisant ainsi au moins un mélange composant(s) additif(s)/charge; détermination d'au moins un rapport pondéral X:Al₂O₃:SiO₂ dans ledit mélange composant (s) additif(s)/charge, tracé de ce rapport pondéral sur un diagramme de phase du composant ternaire X, Al₂O₃, SiO₂ et dérivation d'informations dudit diagramme de phase indiquant si ledit mélange composant(s) additif(s)/charge présente la composition appropriée pour former des scories essentiellement en phase liquide sous des conditions de gazéification; et
gazéification dudit mélange composant(s) additif(s)/charge dans un gazéificateur, muni d'une paroi intérieure et d'un trou à crasses, sous des conditions de gazéification et en présence de vapeur, produisant ainsi un gaz comprenant de l'hydrogène et du monoxyde de carbone, dans lequel sous les conditions de gazéification le matériau formant des scories dans ledit mélange composant(s) additif(s)/charge produit des scories de viscosité appropriée qui mouillent ladite paroi intérieure dudit gazéificateur pour former une couche intérieure figée de scories et une couche extérieure fondue de scories sur ladite paroi intérieure; dans lequel lesdites scories moulées s'écoulent librement au travers dudit trou à crasses; et dans lequel lesdites scories moulées ne sont pas entraînées à l'extérieur du sommet du gazéificateur.

2. Procédé selon la revendication 1, dans lequel 1 à 10%, en poids de la charge de coke, dudit matériau formant des scories est ajouté à ladite charge de coke.

3. Procédé selon la revendication 1 ou 2, dans lequel la température dans le gazéificateur est comprise entre 1100°C environ et 2000°C environ.

4. Procédé selon l'une quelconque des revendications 1 à 3, dans lequel la pression dans le gazéificateur est comprise entre 21 bar et 31,5 bar.

5. Procédé selon l'une quelconque des revendications 1 à 4, dans lequel ladite vapeur comprend 15 à 35% en poids basé sur ledit coke de pétrole.

6. Procédé selon l'une quelconque des revendications i à 5, dans lequel il existe un étage de pulvérisation de la charge de coke en amont dudit gazéificateur et dans lequel ledit matériau formant des scories est mélangé à l'état sec avec ladite charge de coke au niveau dudit étage de pulvérisation.

7. Procédé selon l'une quelconque des revendications 1 à 5, dans lequel il existe un étage de pulvérisation de la charge de coke en amont dudit gazéificateur et dans lequel ledit matériau formant des scories est mélangé à sec avec ladite charge de coke après ledit étage de pulvérisation.

8. Procédé selon l'une quelconque des revendications 1 à 7 comprenant les étapes de:
production d'un premier mélange composant(s) additif(s)/charge;
détermination d'un rapport pondéral initial X:Al₂O₃:SiO₂ dans ledit mélange composant(s) additif(s)/charge,
tracé dudit rapport pondéral initial sur un diagramme de phase du composant ternaire X, Al₂O₃, SiO₂; modification dudit rapport pondéral initial en mélangeant avec ledit premier mélange composant(s) additif(s)/charge une quantité suffisante d'au moins un composant additif sélectionné parmi X, Al₂O₃, SiO₂, produisant ainsi un deuxième mélange, et obtenant un rapport pondéral final X:Al₂O₃:SiO₂ qui, lorsqu'il est tracé sur ledit diagramme de phase, se situe dans la zone délimitée par les courbes isothermes liquidus dudit diagramme aux températures et pressions de gazéification dans le gazéificateur;
transfert dudit deuxième mélange au gazéificateur; et
gazéification dudit deuxième mélange.

9. Procédé selon la revendication 8, dans lequel le poids de X dans le rapport pondéral final X:Al₂O₃:SiO₂ est constitué essentiellement d'environ 20% en poids à environ 40% en poids du poids total de X, Al₂O₃, SiO₂, où le poids de X est basé sur la forme oxydée des composants X.
